Europäisches Patentamt

(19) European Patent Office

Office européen des brevets

(11) Veröffentlichungsnummer: **0 208 255**

**A1**

(12) **EUROPÄISCHE PATENTANMELDUNG**

(21) Anmeldenummer: **86109033.0**

(22) Anmeldetag: **02.07.86**

(51) Int. Cl.⁴: **B 65 G 65/28**

(30) Priorität: **11.07.85 DE 3524778**

(43) Veröffentlichungstag der Anmeldung:
**14.01.87 Patentblatt 87/3**

(84) Benannte Vertragsstaaten:
**AT BE CH DE FR GB LI NL SE**

(71) Anmelder: **Oppermann + Deichmann Inh. Reinhaber
Lippe Maschinenfabrik
Pfingstrasse 12
D-3300 Braunschweig(DE)**

(72) Erfinder: **Lippe, Reinhard, Dipl.-Ing.
Auf dem Anger 9
D-3300 Braunschweig(DE)**

(72) Erfinder: **Voigt, Dietmar
David Mansfeldweg 11
D-3300 Braunschweig(DE)**

(74) Vertreter: **Döring, Rudolf, Dr.-Ing. et al,
Patentanwälte Dr.-Ing. R. Döring Dipl.-Phys. Dr. J. Fricke
Jasperallee 1a
D-3300 Braunschweig(DE)**

(54) Vorrichtung zum Aufnehmen und Abfördern von in Haufwerken gelagerten Feldfrüchten.

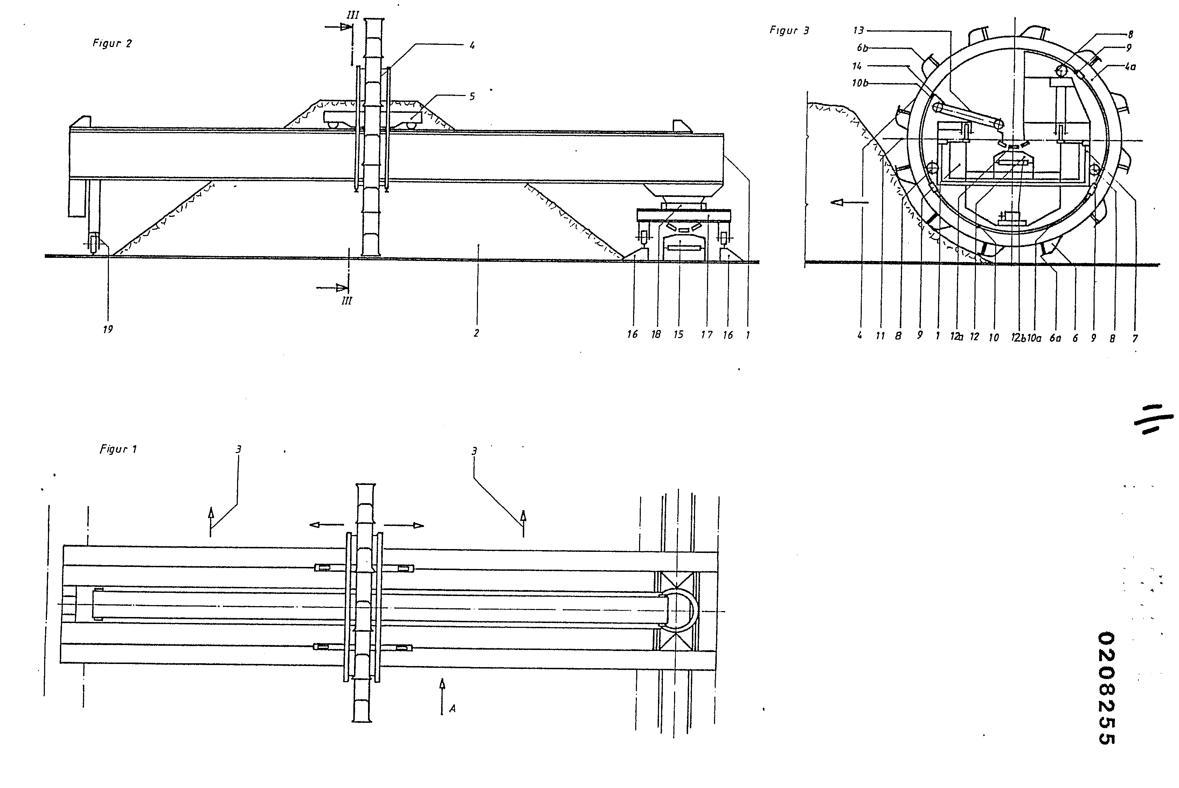

(57) Die Vorrichtung zum Aufnehmen und Abfördern von in Haufwerken gelagerten Feldfrüchten weist eine längs des Haufwerkes (2) verfahrbare, sich über die Breite des Haufwerkes erstreckende Brücke (1) auf, auf der ein längs der Brücke verfahrbares, rotierend antreibbares Schaufelrad (4) gehalten ist. Dieses ist mit kratzerförmigen Schaufeln (6) und einem der Krümmung des Rades angepaßten ortsfesten Boden (10) ausgerüstet, über welchen die Schaufeln bis zur Entleerung hinweggleiten. In Brückenlängsrichtung ist ein durch das Schaufelrad hindurchgehendes antreibbares Brückenförderband (12) angeordnet. Der mit den Schaufeln (6) zusammenwirkende Boden (10) endet in Mitnahmerichtung der Feldfrüchte nur so weit oberhalb der horizontalen Mittellängsebene (11) des Schaufelrades, daß ein Abböschen und Abgleiten der Feldfrüchte aus den Schaufeln in das Innere des Schaufelrades ermöglicht wird. Zwischen dem oberen Ende (10b) des Bodens (10) und dem Brückenförderband (12) ist ein antreibbares endloses Zwischenförderband (13) vorgesehen. Die Feldfrüchte werden ohne Überwindung größerer Fallhöhen auf das Brückenförderband (12) überführt, welches unterhalb der horizontalen Mittellängsebene des Schaufelrades angeordnet werden kann (Figur 3).

Figur 3

EP 0 208 255 A1

0208255

Oppermann + Deichmann
Inh. Reinhard Lippe
Maschinenfabrik
Pfingststr. 12
3300 Braunschweig

Vorrichtung zum Aufnehmen und Abfördern von in Haufwerken gelagerten Feldfrüchten

Die Erfindung betrifft eine Vorrichtung zum Aufnehmen
und Abfördern von in Haufwerken, insbesondere offenen
Silos, gelagerten Feldfrüchten, vorzugsweise Zuckerrüben, gemäß dem Gattungsbegriff des Anspruches 1.

In jüngerer Zeit werden für das Aufnehmen und Abfördern von Feldfrüchten aus Haufwerken, wie offenen Silos
oder dgl., vermehrt Schaufelräder eingesetzt, ähnlich
wie sie bereits im Zusammenhang mit der Kohlegewinnung
im Tagebau oder der Sand- und Kiesgewinnung verwendet
werden.

Gemäß dem Gattungsbegriff des Anspruches 1 sind die
Schaufelräder in Vorrichtungen zum Aufnehmen und Abfördern von Feldfrüchten, wie Zuckerrüben, nicht mit
Schaufeln in Form von offenen Bechern ausgeführt, sondern die Schaufeln ähneln den Kratzerelementen von Kratzerförderern und wirken mit einem der Krümmung des Rades angepaßten ortsfesten Boden zusammen, wie dies auch bei Kratzerförderern der Fall ist.

Die Entleerung der Schaufeln erfolgt bei den bekannten Schaufelrädern zum Aufnehmen und Abfördern von Feldfrüchten dadurch, daß der mit den Schaufeln zusammenwirkende Boden im Bereich des oberen Scheitelpunktes, und zwar kurz vor diesem Scheitelpunkt endet oder aber dort eine größere Unterbrechung aufweist, so daß die von den Schaufeln mitgeführten Rüben in das Innere des Schaufelrades fallen und dort von einer Zuführeinrichtung in Form eines Trichters aufgefangen und auf das Brückenförderband weitergeleitet werden.

Da die Schaufelräder einen relativ großen Durchmesser in der Größenordnung von 10 und mehr Meter aufweisen, ist es zur Vermeidung großer Fallhöhen für die Feldfrüchte bei ihrer Überführung auf das Brückenförderband erforderlich, das Brückenförderband so anzuordnen, daß es sich durch die obere Hälfte des Schaufelrades erstreckt. Dennoch lassen sich Fallwege der Feldfrüchte von 2 bis 3 m nicht vermeiden, da das Brückenförderband nicht beliebig hoch innerhalb des Durchmessers des Schaufelrades angeordnet werden kann. Zum einen ist die sehr hohe Anordnung des Brückenförderbandes baulich sehr aufwendig, zum anderen dient das Brückenförderband zur Weiterleitung der Feldfrüchte auf einen Weiterförderer, welcher in der Regel über relativ lange Wege die Feldfrüchte den Weiterverarbeitungsstationen zuführt und aus Kostengründen möglichst niedrig oberhalb des Bodens verlaufen soll, ohne daß aufwendige Traggerüste für diesen Förderer erforderlich sind. Bei großen Höhenunterschieden zwischen dem Brückenförderband und dem Weiterförderer ergeben sich zusätzliche Probleme im Zusammenhang mit der Übergabe der Feldfrüchte von einem sehr hochliegenden Brückenförderband auf einen tiefliegenden Weiterförderer. Selbst bei relativ hoher Anordnung des Brückenförderbandes innerhalb des Schaufelrades ergeben sich bei der Überführung der Feldfrüchte von den Schaufeln auf das Brückenförderband noch Fallhöhen der Feldfrüchte von einigen Metern. Hierdurch treten in erhöhtem Maße Beschädigungen der Feldfrüchte auf, die sich auch bei Anordnung von Leitblechen, wie sie von den Trichtern beispielsweise gebildet werden, nicht vermeiden lassen. Bei Feldfrüchten in Form von Zuckerrüben wirken sich die Beschädigungen auch bei unmittelbarer Weiterverarbeitung der Rüben aus, da in erhöhtem Maße Rübenbruchstücke anfallen, die schwieriger zu verarbeiten sind und die ebenso wie Verletzungsstellen der Rüben zu erheblichen Zuckerverlusten führen.

Der Erfindung liegt die Aufgabe zugrunde, eine Vorrichtung der einleitend genannten Art so auszubilden, daß eine schonende Behandlung der Feldfrüchte bei der Überführung aus den Schaufeln zum Brückenförderband erreicht wird und darüber hinaus eine tiefliegende Anordnung des Brückenförderbandes innerhalb des Schaufelrades erreicht wird.

Zur Lösung vorstehender Aufgabe kennzeichnet sich die eingangs beschriebene Vorrichtung erfindungsgemäß dadurch, daß der mit den Schaufeln zusammenwirkende Boden sich in Mitnahmerichtung der Feldfrüchte nur so weit bis oberhalb der horizontalen Mittellängsebene des Schaufelrades erstreckt oder dort unterbrochen ist, daß ein Abböschen und Abgleiten der Feldfrüchte aus den Schaufeln in das Innere des Schaufelrades möglich ist, und daß unmittelbar unterhalb des Endes oder der Unterbrechung des Bodens ein antreibbares endloses Förderband als Zwischenförderband vorgesehen ist, welches sich

4

bis dicht oberhalb des oberen Trums des Brückenförderbandes erstreckt, das seinerseits unterhalb der horizontalen Mittellängsebene des Schaufelrades angeordnet ist.

Da die zu dem ortsfesten Boden hin offenen, im Querschnitt etwa U-förmigen Schaufeln gegen die Bewegungsrichtung des Schaufelrades gesehen sich verjüngen, bildet die dem Boden gegenüberliegende Rückwand einer jeden Schaufel mit der Rückwand einen spitzen Winkel, so daß die Entleerung der Schaufeln bereits unmittelbar oberhalb der horizontalen Mittellängsebene des Schaufelrades möglich ist, wenn dort der ortsfeste Boden endet bzw. wenn dort eine entsprechende Unterbrechung des ortsfesten Bodens vorhanden ist. Die Feldfrüchte können somit bereits in diesem Bereich aus den Schaufeln durch eine Rollbewegung entlang dem Böschungswinkel bzw. durch eine Gleitbewegung entlang der geneigten Rückenwandung der jeweils im Entleerungsbereich befindlichen Schaufel auf das unmittelbar in diesem Bereich vorgesehene Zwischenförderband gelangen, ohne daß die Feldfrüchte eine Fallhöhe überwinden müssen. Es erfolgt praktisch eine gleitende bzw. wälzende Übergabe der Feldfrüchte, ohne daß diese eine freie Fallhöhe zu überwinden haben. Das Zwischenförderband kann seinerseits zum Inneren des Schaufelrades hin geneigt verlaufen, so daß eine entsprechend tiefe Anordnung des Brückenförderbandes in dem Schaufelrad möglich ist. Hierdurch wird der Aufwand für die Tragkonstruktion des Brückenförderbandes erheblich vermindert und eine Übergabe der Feldfrüchte von dem Brückenförderband auf einen dicht oberhalb des Erdbodens verlaufenden Weiterförderer erleichtert.

Die Anordnung eines möglichst tief angeordneten Weiterförderers ist auch im Hinblick auf dessen mögliche Kollision mit der verfahrbaren Brücke für das Aufnehmen und Abfördern der Feldfrüchte sowie auch mit den Einrichtungen für die Zuführung und das Ablegen der Feldfrüchte in dem Silo sehr wünschenswert bzw. erforderlich. Durch die neue Ausbildung wird es möglich, den Weiterförderer unmittelbar seitlich neben dem Haufwerk bzw. Silo noch unterhalb des einen Endes der Brücke anzuordnen und somit raumsparend unterzubringen.

Zweckmäßig ist es, wenn zwischen dem Ende oder der Unterbrechung des Bodens und dem Zwischenförderband ein Überleitblech bzw. eine Überleitschurre vorgesehen ist, welche die aus den in der Entleerungsstellung befindlichen Schaufeln austretenden Feldfrüchte gleitend auf das Zwischenförderband überleiten.

Das Zwischenförderband erstreckt sich zweckmäßig in radialer Richtung in das Innere des Schaufelrades, wenngleich auch eine schräg nach außen weisende Stellung dieses Zwischenförderbandes möglich ist. Beim Verlauf des Zwischenförderbandes in radialer Richtung ergibt sich die kürzeste Länge für dieses Band und eine günstige Abstützung auf dem ohnehin in dem Hubrad notwendigen Tragrahmen, welcher auf der Brücke verfahrbar gehalten ist und zur Abstützung der das Hubrad tragenden Lagerungen dient.

In jedem Falle ist es zweckmäßig, das Zwischenförderband so anzuordnen, daß es zu dem oberen Trum des Brückenförderbandes hin nach unten geneigt verläuft, da hierdurch das Brückenförderband entsprechend tiefer innerhalb des Schaufelrades angeordnet werden kann, ohne daß die Feldfrüchte bei der Übergabe von dem Zwischenförderband auf das Brückenförderband eine größere Fallhöhe überwinden müssen.

Die Zeichnung gibt ein Ausführungsbeispiel der Erfindung in schematischer Darstellung wieder.

Es zeigen:

Fig. 1 die Draufsicht auf eine Vorrichtung nach der Erfindung,

Fig. 2 die Ansicht in Richtung des Pfeiles A gegen die Vorrichtung nach Fig. 1,

Fig. 3 einen Schnitt durch die Anordnung nach Fig. 2 entlang der Schnittlinie III-III.

In den Figuren ist mit 1 eine verfahrbare Brücke bezeichnet, welche längs eines Haufwerkes 2 in Richtung der Pfeile 3 in Fig. 1 verfahrbar ist. Die Brücke 1 erstreckt sich dabei über die Breite des Haufwerkes 2 und trägt ein insgesamt mit 4 bezeichnetes Schaufelrad, durch welches sich die Brücke 1 hindurcherstreckt. Das Schaufelrad 4 ist seinerseits an einem Fahrwerk 5 montiert, welches auf an der Oberseite der Brücke 1 vorgesehenen Schienen verfahrbar ist, so daß das Schaufelrad 4 auf der Brücke in deren Längsrichtung, also quer zur Längserstreckung des Haufwerkes 2, hin- und herverfahren werden kann.

Das Schaufelrad 4 weist zwei im Abstand zueinander gehaltene Radkränze 4a auf, zwischen denen die kratzerartigen Schaufeln 6 auf dem Umfang im Abstand voneinander befestigt sind. Die kratzerförmigen Schaufeln 6 weisen einen U-förmigen Querschnitt auf und sind an ihren in Förderrichtung weisenden Kanten mit Greifblechen 6a ausgerüstet.

Die Radkränze 4a mit den daran gehaltenen Kratzerschaufeln 6 sind rotierbar auf einem rahmenförmigen Traggerüst 7 gehalten, das von der Brücke 1 mit Spiel umschlossen und mit dem Fahrwerk 5 fest verbunden ist, so daß sich das Traggerüst 7 über das Fahrwerk 5 auf der Brücke 1 abstützt. An dem Traggerüst 7 sind über Konsolen bzw. aufragende Streben Stützräder bzw. -rollen 8 gehalten, die mit den Radkränzen zusammenwirken.

Zur Vermeidung von Kippbewegungen des Schaufelrades 4 sind ferner an dem Traggerüst 7 seitlich an den Radkränzen 4a angreifende Stützrollen 9 erkennbar.

Der Zwischenraum zwischen den im Abstand gehaltenen Radkränzen 4a ist auf der Innenseite der Radkränze von einem der Krümmung der Radkränze angepaßten ortsfesten Boden 10 abgedeckt, der sich in dem dargestellten Beispiel der Fig. 3 von der Stelle 10a im unteren Bereich des Hubrades 4 bis zu der Stelle 10b etwas oberhalb der horizontalen Mittellängsebene 11 des Schaufelrades 4 erstreckt. Der Boden 10a ist als ortsfestes Teil mit dem Traggerüst 7 über in der Zeichnung nicht wiedergegebene Streben verbunden.

Die in der Regel als Fachwerkkonstruktion bzw. als geschlossene Kastenkonstruktion gefertigte Brücke umschließt ein in ihrer Längsrichtung verlaufendes antreibbares Brückenförderband 12, dessen oberes Trum 12a das Fördertrum bildet und dessen unteres Trum 12b das Leertrum darstellt.

Zwischen der Stelle 10b, also dem oberen Ende des zwischen den Radkränzen 4a befindlichen ortsfesten Bodens 10, und dem oberen Trum 12a des Brückenförderbandes 12 ist ein antreibbares endloses Förderband als Zwischenförderband 13 angeordnet, welches zu dem oberen Trum 12a des Brückenförderbandes 12 hin geneigt nach unten verläuft. Zwischen dem oberen Ende 10b des zwischen den Radkränzen 4a angeordneten ortsfesten Bodens 10 und dem Zwischenförderband 13 ist eine Überleitschurre 14 erkennbar.

Beim Betrieb des Schaufelrades 4 wird dieses gegen das Haufwerk 2 bewegt und angetrieben, so daß die kratzerförmigen Schaufeln 6 durch entsprechenden Eingriff in das Haufwerk mit Feldfrüchten gefüllt werden. Bereits vom Eingriff der Schaufeln 6 in das Haufwerk 2 an sind die Schaufeln 6 zum Inneren des Schaufelrades 4 hin durch den ortsfesten Boden 10 abgedeckt. Die von den Schaufeln 6 ergriffenen Feldfrüchte gelangen im Bereich des oberen Endes 10b des Bodens 10 durch den zwischen den Radkränzen 4a befindlichen Freiraum über die Schurre 14 auf das Zwischenförderband 13 und werden von diesem an dem zum Inneren des Schaufelrades 4 hinweisenden Ende auf das obere Trum 12a des Brückenförderbandes 12 übergeben, von dem sie zu einem Weiterförderer transportiert werden.

Wenn die Schaufeln 6 das obere Ende 10b des ortsfesten Bodens 10 passieren, erfolgt zunächst durch Abböschen der in den Schaufeln befindlichen Feldfrüchte ein Überführen dieser Feldfrüchte auf das Zwischenförderband 13 und im Zuge der weiteren Passierbewegung der sich entleerenden Schaufel eine zunehmende Gleitbewegung der Feldfrüchte entlang der rückwärtigen Begrenzungswand 6b der jeweils in der Entleerungsposition befindlichen Schaufel, wie dies aus der in Fig. 3 gerade in der Entleerungsposition befindlichen Schaufel deutlich erkennbar ist. Diese Gleitbewegung der Feldfrüchte wird dadurch verursacht, daß die Schaufeln 6 gegen die Bewegungsrichtung des Schaufelrades 4 gesehen spitz zulaufen, d.h. ihre nach außen gerichteten Wandungen 6b verlaufen zum Schaufelradinneren hin geneigt, so daß die Feldfrüchte auf dieser geneigten Wandung bis zur vollständigen Entleerung der kratzerförmigen Schaufeln 6 über die Schurre 14 auf das Zwischenförderband 13 ohne Überwindung einer Fallhöhe überführt werden.

Die Fig. 3 läßt erkennen, daß das Aufgabeende des Zwischenförderbandes 13 nur wenig oberhalb der horizontalen Mittellängsebene des Schaufelrades 4 liegen muß, um die Entleerung der kratzerförmigen Schaufeln 6 zu ermöglichen. Hierdurch sowie zusätzlich durch die geneigte Anordnung des Zwischenförderbandes 13 kann das Brückenförderband 12 unterhalb der horizontalen Mittellängsebene 11 des Schaufelrades 4 und damit innerhalb des Schaufelrades sehr tief angeordnet werden, so daß eine problemlose Übergabe der Feldfrüchte von dem Brückenförderband 12 auf einen noch tieferliegenden Weiterförderer ermöglicht wird.

In dem dargestellten Beispiel ist der Weiterförderer gemäß Fig. 2 unterhalb des in dieser Figur rechten Endes der Brücke 1 angeordnet und mit 15 bezeichnet. Zur Verminderung der Fallhöhe der Feldfrüchte von dem Brückenförderer 12 auf den Weiterförderer 15 ist der Brückenförderer 12 in seinem in Fig. 2 rechten Abschnitt 12a geneigt verlaufend angeordnet.

Der Weiterförderer 15 erstreckt sich in dem Beispiel gemäß Fig. 2 zwischen den Schienen 16, auf denen sich das in diesem Beispiel mit einem Drehkranz 18 ausgerüstete Fahrwerk 17 der Brücke 1 abstützt. Das andere Ende der Brücke ist über ein Fahrwerk 19 ohne Drehkranz ebenfalls auf einer Schiene abgestützt.

Der Antrieb der Brücke sowie des Schaufelrades und der beschriebenen Förderer erfolgt in üblicher Weise mit entsprechenden Antrieben, die aus Übersichtlichkeitsgründen in der Zeichnung nicht wiedergegeben sind.

## Ansprüche

1. Vorrichtung zum Aufnehmen und Abfördern von in Haufwerken, insbesondere offenen Silos, gelagerten Feldfrüchten, vorzugsweise Zuckerrüben, mit einer in Längsrichtung des Haufwerkes verfahrbaren, sich über die Breite des Haufwerkes erstreckenden Brücke, einem die Brücke einschließenden sowie längs der Brücke verfahrbaren, rotierend antreibbaren Schaufelrad mit kratzerförmigen Schaufeln und einem den Schaufeln zugeordneten, der Krümmung des Rades angepaßten ortsfesten Boden, über welchen die Schaufeln bis zur Entleerung hinweggleiten, und einem in Brückenlängsrichtung durch das Schaufelrad hindurchgehenden antreibbaren Brückenförderband, welchem die Feldfrüchte aus den Schaufeln über eine in dem Schaufelrad vorgesehene Zuführeinrichtung zugeleitet werden, die sich von dem in Mitnahmerichtung liegenden Ende des Bodens oder einer Aussparung im Boden zu dem Brückenförderband erstreckt, d a d u r c h g e k e n n z e i c h n e t, daß der mit den Schaufeln (6) zusammenwirkende Boden (10) sich in Mitnahmerichtung der Feldfrüchte nur so weit bis oberhalb der horizontalen Mittellängsebene (11) des Schaufelrades (4) ersreckt oder dort unterbrochen ist, daß ein Abböschen und Abgleiten der Feldfrüchte aus den Schaufeln in das Innere des Schaufelrades möglich ist, und daß unmittelbar unterhalb des oberen Endes (10b) oder der Unterbrechung des Bodens ein antreibbares endloses Förderband als Zwischenförderband (13) vorgesehen ist, welches sich bis dicht oberhalb des oberen Trums (12a) des Brückenförderbandes (12) erstreckt, das seinerseits unterhalb der horizontalen Mittellängsebene des Schaufelrades angeordnet ist.

2. Vorrichtung nach Anspruch 1, d a d u r c h g e k e n n z e i c h n e t, daß zwischen dem oberen Ende (10b) oder der Unterbrechung des Bodens (10) und dem Zwischenförderband (13) ein Überleitblech oder eine Überleitschurre (14) vorgesehen ist.

3. Vorrichtung nach Anspruch 1 oder 2, d a d u r c h g e k e n n z e i c h n e t, daß das Zwischenförderband (13) von dem oberen Ende (10b) oder der Unterbrechung des Bodens (10) zu dem oberen Trum (12a) des Brückenförderbandes (12) nach unten geneigt verläuft.

Figur 3

Figur 2

Figur 1

# Europäisches Patentamt

## EUROPÄISCHER RECHERCHENBERICHT

| | EINSCHLÄGIGE DOKUMENTE | | EP 86109033.0 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| A | <u>GB - A - 2 103 571</u> (QUADRACAST INC.) <br> * Fig. 1 * <br><br> -- | 1 | B 65 G 65/28 |
| A | <u>DE - A - 2 417 803</u> (BARRE) <br> * Fig. 1 * <br><br> -- | 1 | |
| A | <u>DE - A - 1 531 893</u> (DEMAG) <br> * Fig. 1,4 * <br><br> ---- | 1 | |

**RECHERCHIERTE SACHGEBIETE (Int. Cl.4)**

B 65 G

E 02 F

Der vorliegende Recherchenbericht wurde für alle Patentansprüche erstellt

| Recherchenort | Abschlußdatum der Recherche | Prüfer |
|---|---|---|
| WIEN | 14-10-1986 | PISSENBERGER |